# EUROPEAN PATENT APPLICATION

(11) **EP 1 204 040 A2**
(43) Date of publication of application: **08.05.2002**
(21) Application number: 01309099.8
(22) Date of filing: 26.10.2001
(51) Int. Cl.: G06F 17/30

(54) **Method for managing alterations of contents**

(30) Priority: 01.11.2000 JP 2000334468
(71) Applicant: Hitachi, Ltd., Chiyoda-ku, Tokyo (JP)
(72) Inventor: Shinoda, Takashi, c/o Int. Prop. Grp. Hitachi, Ltd, Chioyoda-ku, Tokyo 100-8220 (JP)
(74) Representative: Calderbank, Thomas Roger

(57) **Abstract**

Content change such as a move of a URL indicating an address of a content, and deletion of a content, is economically managed to provide a user, who browses the content, with services at the time of content change. A content change registration program provided in a computer such as a server is invoked at the time of content change, and records a change history record in a content change management table. When a requested content is not found in a database, a WWW server program invokes a content change reference program, which refers to the content change management table, converts a specified URL into a URL after move, and returns the URL after move to the WWW server program. If the specified URL has been deleted, the content change reference program returns a URL of content, which displays a deletion message, to the WWW server program. In the case of a computer like a proxy server interposed between a client computer and a server computer, when receiving a content request from the client, a content change management table obtained from the WWW server is referred to. After that, a specified URL is converted into a URL after move. Then, the URL after move is transmitted to the WWW server. If the specified URL has been deleted, a response message informing that the content requested by the client has been deleted is sent.

## Description

The present invention relates to a system comprising a client computer for requesting content in order to browse the content, and a server computer for providing a requested content. More specifically, the present invention relates to a method for managing content change such as a move of a content identifier, a deletion of a content, and a change of details of a content.

As regards an access to a content on the Internet from a client terminal through WWW (World Wide Web), there are the following methods: a method in which a URL (Uniform Resource Locator) corresponding to an address of the content is directly specified; a method in which the desired content in a bookmark is specified; a method in which a link is established from another content; and the like. However, if a target content is moved to another URL, or if the target content is deleted, the target content cannot be accessed, which results in an error, even if an access to the content is tried using any of the methods.

Techniques for automatically adapting to a move, change, deletion, or the like, which has been performed for hyperlinked content described in a home page are known from, for example, Japanese Patent Laid-open No. 10-333966, 11-39327, and the like. In addition, a technique for accessing a home page, etc., of which an address has been changed, according to the address after the change is known from Japanese Patent Laid-open No. 10-91512.

According to the prior art described above, when the hyperlinked content described in a content stored in a WWW server is changed, it is automatically updated. However, the great omount of a CPU time of the WWW server is consumed, and frequent communications with other WWW servers are required, because of the following: it is necessary to constantly check if a URL of hyperlinked content is changed or not; when the URL is changed, it is necessary to search a database that stores link information; it is necessary to communicate with a WWW server from which the hyperlink is established; and it is necessary to update hyperlink information of a content from which the hyperlink is established. There are a great number of contents on the Internet. In addition, contents are newly established, and are moved, very often every day. It is therefore thought that a number of changes of URLs are considerably large. Thus, a method for managing content change more realistically is desired.

Additionally, Japanese Patent Laid-open No. 10-91512 describes a technique for adapting to the change of an address such as a home page address; however, it is desired to provide users with services for adapting to not only the change of a hyperlinked content address but also the deletion of content.

An object of the present invention is to manage content identifiers economically, and to provide users, who browse content, with a method for managing content change.

The present invention is characterized by a method for managing content change comprising the steps of: receiving a content request that specifies a content identifier; referring to a table that stores a content identifier after change corresponding to a content identifier before change, and a content identifier before deletion; if a specified content identifier is equal to the content identifier before change, treating the content request as a content request that specifies the corresponding content identifier after change, and thereby sending appropriate content as a response; and if the specified content identifier is equal to the content identifier before deletion, it is judged that the requested content has been deleted, and thereby sending a response message informing the deletion.

### IN THE DRAWINGS

Fig. 1 is a diagram illustrating a system configuration of a first embodiment;
Fig. 2 is a diagram illustrating data structure of a content change management table 13 of an embodiment;
Fig. 3 is a flowchart illustrating a process flow of a content change reference program 16 of the first embodiment;
Fig. 4 is a flowchart illustrating a process flow of a WWW browser program 21 of a second embodiment;
Fig. 5 is a flowchart illustrating a detail processing flow of a step 56 shown in Fig 4;
Fig. 6 is a diagram illustrating a system configuration of a third embodiment;
Fig. 7 is a flowchart illustrating a process flow of a content change reference program 16' of a third embodiment; and
Fig. 8 is a schematic diagram illustrating processing procedures of a fourth embodiment.

Embodiments of the present invention will be described with reference to the drawings as below.

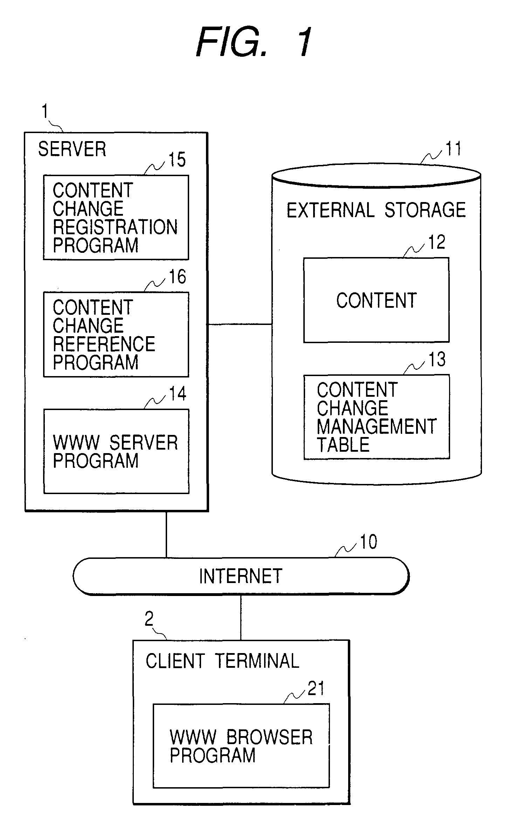

Fig. 1 is a diagram illustrating a system configuration of a first embodiment. A system comprises a server 1, a client terminal 2, and a network, such as the Internet 10, which connects the server 1 to the client terminal 2. The server 1 is a computer to which an external storage 11 is connected. The external storage stores content(s) 12 and a content change management table 13. The content change management table 13 records a history including the following: the change of a content identifier of content in the content(s) 12; the deletion of content in the content(s) 12; and the update of details of the contents. A memory of the server 1 stores a WWW server program 14, a content change registration program 15, and a content change reference program 16. Those programs are executed by the server 1. The WWW server program 14 receives a content request transmitted from the client terminal 2 via the Internet 10, searches the content 12, and then transmits the requested content to the client terminal 2. The content change registration program 15 responds to a request of history registration resulting from a content change, and registers a content change history in the content change management table 13. The content change reference program 16 is invoked from the WWW server program 14 if the requested content is not found in the content 12. The content change reference program 16 refers to the content change management table 13, and passes a content identifier after a move or an identifier of a page showing that a target content has been deleted to the WWW server program 14. It is to be noted that the content change reference program 16 may be built into the WWW server program 14 as a part of the WWW server program 14.

The client terminal 2 is equipment used both for a computer and a terminal. A memory of the client terminal 2 stores a WWW browser program 21 that is executed by the client terminal 2. The WWW browser program 21 transmits an inputted URL of a content to the server 1 to request the content. In addition, the WWW browser program 21 also interprets the content, which has been received from the server 1, to display the content on the display device.

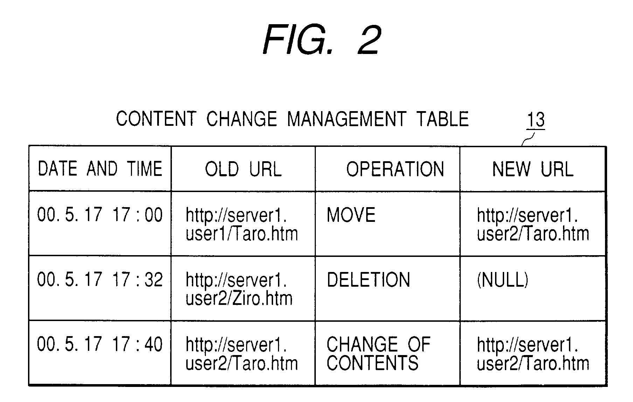

Fig. 2 is a diagram illustrating data structure of the content change management table 13 that manages a content change in the server 1. Each record of the content change management table 13 is composed of the following items: a date and time, old URL, operation, and new URL. The date and time represent a date and time when the record has been recorded; the old URL represents a URL before content has been changed; the new URL represents a URL after a change; the operation represents a type of change operation. A history record, of which operation is "move", shows that a content identifier of a URL has been changed from the old URL to the new URL. A history record, of which operation is "deletion", shows that content indicated by the old URL has been deleted from the content 12. A history record, of which operation is "change of contents", shows that there is no change of the URL (that is to say, the old URL and the new URL are identical to each other), and that contents of the content indicated by the URL has been changed. The URL includes a server identifier and a content identifier of the server 1. Records of the content change management table 13 are arranged in ascending order of "date and time" (in time sequential order). By the way, a history record, of which operation is "change of contents", may be stored in another table separated from the history records, of which operation is "move" or "deletion". In addition, when the content identifier is mentioned in this specification, it indicates the above-mentioned content identifier that follows the server identifier in a narrow sense. The content identifier indicates an address for an access to a specific content (that is, a URL) in a broad sense.

The content change registration program 15 is invoked from another program, and performs addition, update, or deletion of a record of the content change management table 13 as described below.
(1) The content change registration program 15 is invoked by a content edition program (not shown in the figure) operating on the server 1, and additionally registers a new record in the content change management table 13. In the new record, "operation" is update of details, move, or deletion according to the following instructions: update of details of the content; change of a content identifier; or deletion of the content, respectively.
(2) The content change registration program 15 is invoked by a file manager (not shown in the figure) operating on the server 1, and additionally registers a new record in the content change management table 13. In the new record, "operation" is move or deletion according to the following instructions: change of a content identifier; or deletion of the content, respectively.

By the way, it is also possible to execute the content change registration program 15 by an instruction from a terminal on the server 1 side, which is connected to the server 1, to add, update, or delete a record of the content change management table 13. In addition, if a server identifier in a URL of the content is changed from an identifier of the server 1 to another identifier, a record, of which "operation" is deletion, is always registered in the content change management table 13.

When receiving a content request from the client terminal 2, the WWW server program 14 searches the content 12 according to a URL specified by a browsing user. If the requested content is found, the WWW server program 14 transmits the content to the client terminal 2. If the requested content is not found, the WWW server program 14 passes control to the content change reference program 16.

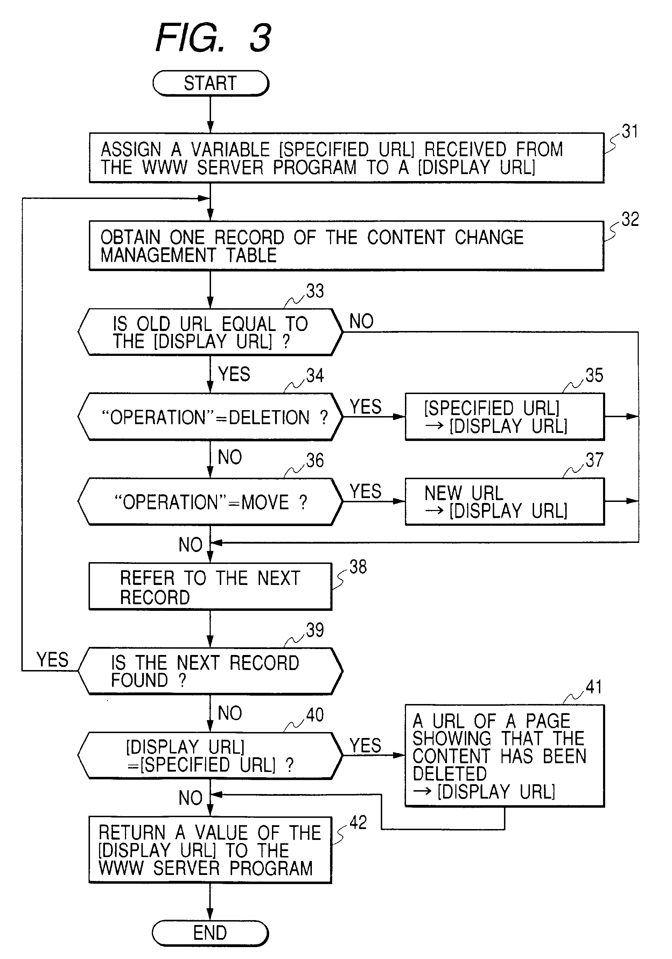

Fig. 3 is a flowchart illustrating a process flow of the content change reference program 16. When the content change reference program 16 is called with variables [specified URL] and [display URL] from the WWW server program 14, the content change reference program 16 assigns the [specified URL] that is specified by a browsing user to the [display URL] in the first place (step 31). The [display URL] is an URL of the content that is transmitted to the client terminal 2 for displaying. The content change reference program 16 obtains next one record of the content change management table 13 (step 32), and judges whether or not a value of "old URL" in the obtained record is the same as that of the [display URL] (step 33). If both are not the same, the process proceeds to a step 38. If both are the same (step 33 YES), and if "operation" in the obtained record is deletion (step 34 YES), the [specified URL] is assigned to the [display URL] (step 35) before proceeding to the step 38. If the "operation" in the obtained record is the move (step 36 YES), then "new URL" in the obtained record is assigned to the [display URL] (step 37) before proceeding to the step 38. Next, a next record of the content change management table 13 is referred to (step 38). If the next record is found (step 39 YES), the process returns to the step 32, and the above-mentioned processing is repeated.

If the next record is not found (step 39 NO), whether or not a value of the [display URL] is the same as that of the [specified URL] is judged (step 40). If both are the same, a URL of the content having a message like "The specified page has been deleted" is assigned to the [display URL] (step 41). Next, the content change reference program 16 returns the value of the [display URL] to the WWW server program 14, returns control to the WWW server program 14 (step 42), and ends the processing. The WWW server program 14 searches the content 12 according to the received [display URL], and then transmits appropriate content to the client terminal 2.

According to the processing of steps 32 through 39, when the same content is finally deleted after the content is moved several times, even if the browsing user specifies any URL used before the deletion, it is judged in the step 40 that the [display URL] is the same as the [specified URL], and the process proceeds to the step 41 where processing at the time of the content deletion is performed. In addition, also in the case where after the content is deleted, the content having the same URL is revived and then is moved, it is judged in the step 40 that the [display URL] is not equal to the [specified URL] regardless of the specified URL by the browsing user, resulting in a state in which "new URL" after the move is stored in the [display URL]. Moreover, a record, of which "operation" is change of contents, is ignored regardless of the judgments in the steps 34 and 36 (the judgments becomes NO).

By the way, if it is judged in the step 40 that the [display URL] is not equal to the [specified URL], the URL of the content specified by the browsing user has been moved. In this case, instead of returning the "new URL" to the WWW server program 14 as the [display URL], a URL of content having a message like "Specified content has been moved. Destination URL: "New URL"" may be returned as a [display URL]. This enables the browsing user of the client terminal 2 to make a content request by specifying the "new URL", and also to update "old URL" registered in a bookmark to "new URL".

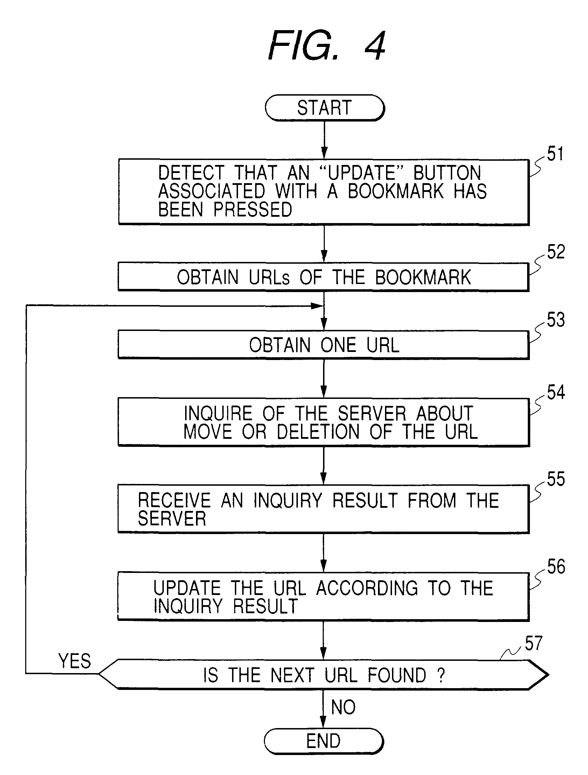

Fig. 4 is a flowchart illustrating a process flow of a second embodiment in which the WWW browser program 21 of the client terminal 2 automatically updates a URL that is registered in a bookmark of the client terminal 2. Accompanying the bookmark, an "update" button is provided on a display screen. When the WWW browser program 21 detects that the browsing user has pressed this "update" button (step 51), the WWW browser program 21 obtains a URL list stored in the storage device as a bookmark (step 52). The WWW browser program 21 obtains a next URL (step 53), transmits the URL to the server 1, and inquires a status of its move or deletion (step 54). In the server 1, a URL change confirmation program (not shown) is invoked. After that, the content change management table 13 is referred to, and the status of the URL is judged. Then, its result is transmitted to the client terminal 2. The WWW browser program 21 receives the inquiry result from the server 1 (step 55), and updates the URL according to the inquiry result (step 56). In other words, if the URL is moved, the WWW browser program 21 updates the URL to an after-update URL. In addition, if the URL is deleted, the WWW browser program 21 deletes the URL from the bookmark. Moreover, if the URL is not changed, the WWW browser program 21 keeps the URL as it is in the bookmark. If a next URL related to the bookmark is found (step 57 YES), the process proceeds to the step 53. If no next URL is found, the processing ends.

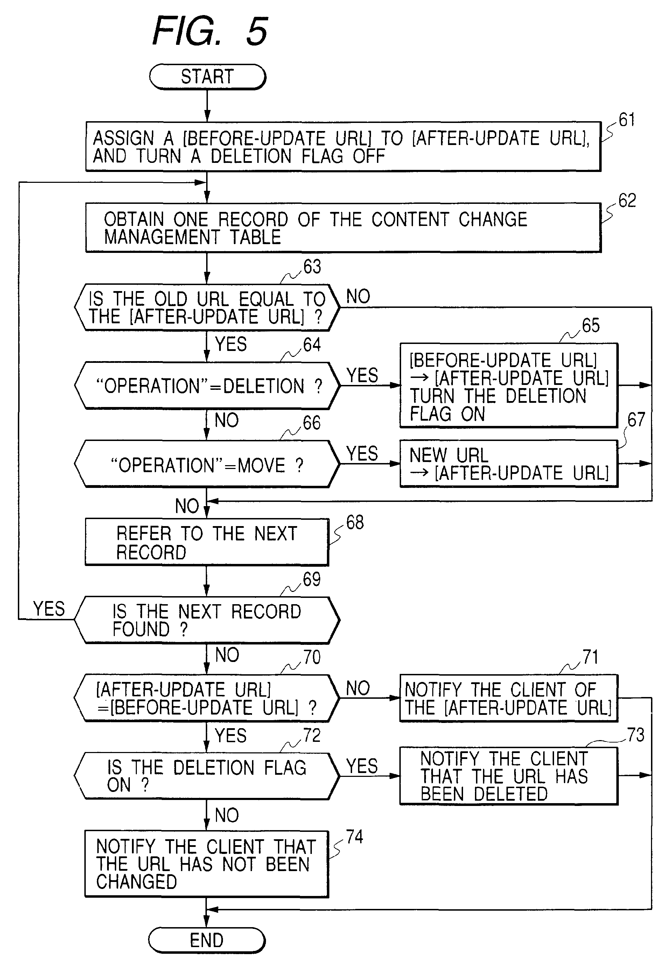

Fig. 5 is a flowchart illustrating a process flow of the URL change confirmation program of the server 1. When receiving an inquiry about a URL status from the client terminal 2, the URL change confirmation program assigns a URL targeted for inquiry to a variable [after-update URL] as [before-update URL] in the first place, and then turns a deletion flag, which is set in the program, off (step 61). Next, the URL change confirmation program obtains a next record from the content change management table 13 (step 62), and judges whether or not values of "old URL" and [after-update URL], which are in the obtained record, are the same (step 63). If both are not the same, the process proceeds to a step 68. If both are the same (step 63 YES), and if "operation" in the obtained record is deletion (step 64 YES), the [before-update URL] is assigned to the [after-update URL], and the deletion flag is turned on (step 65) before proceeding to the step 68. If the "operation" in the obtained record is the move (step 66 YES), then "new URL" in the obtained record is assigned to the [after-update URL] (step 67) before proceeding to the step 68. Next, a next record of the content change management table 13 is referred to (step 68). If the next record is found (step 69 YES), the process returns to the step 62, and the above-mentioned processing is repeated.

If the next record is not found (step 69 NO), it is judged whether or not a value of the [after-update URL] is the same as that of the [before-update URL] (step 70). If both are not the same (step 70 NO), the client terminal 2 is notified of the [after-update URL] (step 71) before the processing ends. If both are the same (step 70 YES), and if the deletion flag is on (step 72 YES), the client terminal 2 is notified of the deletion of the URL (step 73) before the processing ends. If the deletion flag is kept off (step 72 NO), which means that the URL has not been updated, the client terminal 2 is notified of no change of the URL (step 74), and then the processing ends.

The above description is based on the assumption that the server 1 is inquired about change status of all URLs in the bookmark by the WWW browser program 21; however, the server 1 may be inquired about only URLs specified by the user from among those in the bookmark.

In addition, if the content change management table 13 is disclosed as one content, the following processing may also be used: the WWW browser program 21 downloads the whole of the content change management table 13 to the client terminal 2; the WWW browser program 21 obtains the content change management table 13 from the server 1 as steps 54 through 56; and the URLs in the bookmark are updated according to the processing procedures shown in Fig. 5.

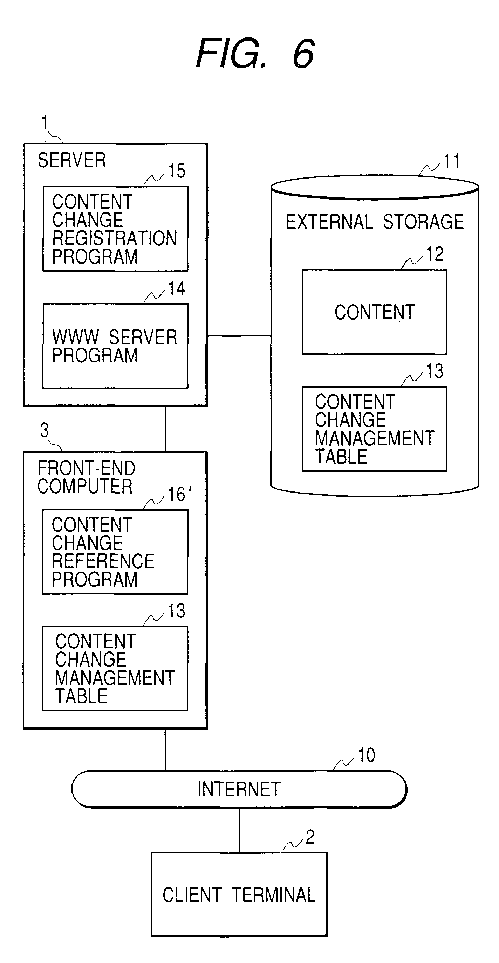

Fig. 6 is a diagram illustrating a system configuration of a third embodiment. The system configuration is as follows: a front-end computer 3 is provided between the server 1 and the Internet 10, which are shown in the first embodiment; and a program, which is equivalent to the content change reference program 16 in the server 1, is provided on the front-end computer 3 as a content change reference program 16'. In addition, a copy of the content change management table 13 stored in the external storage 11 is stored in a memory of the front-end computer 3. The content change management table 13 on the front-end computer 3 is periodically updated so as to reflect an addition of a history record of the content change management table 13 on the server 1 side. The content change reference program 16' receives a content request from the client terminal 2, refers to the content change management table 13, and then judges whether or not a specified URL has been moved or deleted. If a specified URL has been moved, the content change reference program 16' specifies the after-update URL that has updated this, and then transmits a content request to the server 1. If the specified content has been deleted, a page, which indicates that content has been deleted, is transmitted to the client terminal 2. If the specified URL has not been moved or deleted, the specified URL is passed to the server 1 as it is. Moreover, the content change reference program 16' passes content, which has been received from the server 1, to the client terminal 2. Requirements for the front-end computer 3 are only to be a computer interposed between the server 1 and the client terminal 2. The front-end computer 3 may be a firewall of the server 1, or a proxy server.

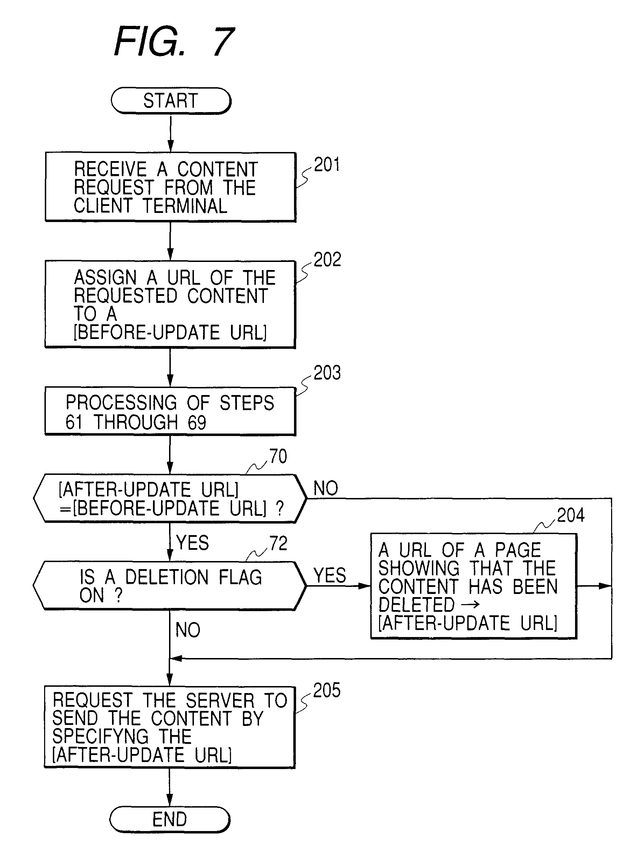

Fig. 7 is a flowchart illustrating a process flow of the content change reference program 16'. When receiving a content request, which specifies a URL, from the client terminal 2 (step 201), the content change reference program 16' assigns the URL of the requested content to the variable [before-update URL] (step 202). Next, processing of steps 61 through 69 shown in Fig. 5 is performed (step 203). When processing of all records of the content change management table 13 is completed, and when an end of the content change management table 13 is reached, it is judged whether or not values of the [after-update URL] and the [before-update URL] are the same (step 70). If both are not the same (step 70 NO), the process proceeds to a step 205. If both are the same (step 70 YES), and if the deletion flag is on (step 72 YES), a URL of a page indicating that content has been deleted is assigned to the [after-update URL] (step 204) before proceeding to the step 205. If the deletion flag is kept off (step 72 NO), the [after-update URL] is specified to make a content request of the server 1 (step 205). If it is judged in the step 70 that the [after-update URL] is not equal to the [before-update URL], a content request may be made of the server 1 by specifying a URL of content having a message such as "Specified content has been moved. Destination URL: [after-update URL]". Alternatively, the front-end computer 3 itself may return the content having such a message to the client terminal 2. Even in the case of the step 204, the front-end computer 3 itself may return a message, which indicates that the content has been deleted, to the client terminal 2.

According to the third embodiment, because there is no direct control passing between the WWW server program 14 and the content change reference program 16', the third embodiment has an advantage that it is not necessary to change the existing WWW server program 14. The third embodiment supports not only the URL move but also the URL deletion. In addition, it is also possible to support a case where after the content of a certain URL is deleted, content of the same URL is made again.

A WWW search engine, of which a type is characterized by collection of content information using robots, searches the content 12 of the servers 1 all over the world, which are connected to the Internet 10, to collect the content information. Then, the WWW search engine extracts search keywords of each content, etc. to register them in a database. However, because of a large number of servers, a considerable length of time is required to complete one round of information collection from all servers. Therefore, until the information collection is completed, there may be the following possibilities: among the content, of which information has already been collected, some are updated in the details of the content; some content is deleted; and some content identifier is moved. A fourth embodiment of the present invention is characterized in that as regards content of which information has already been collected, when details of the content is changed, when the content is deleted, or when the content is moved, it is corrected using the content change management table 13.

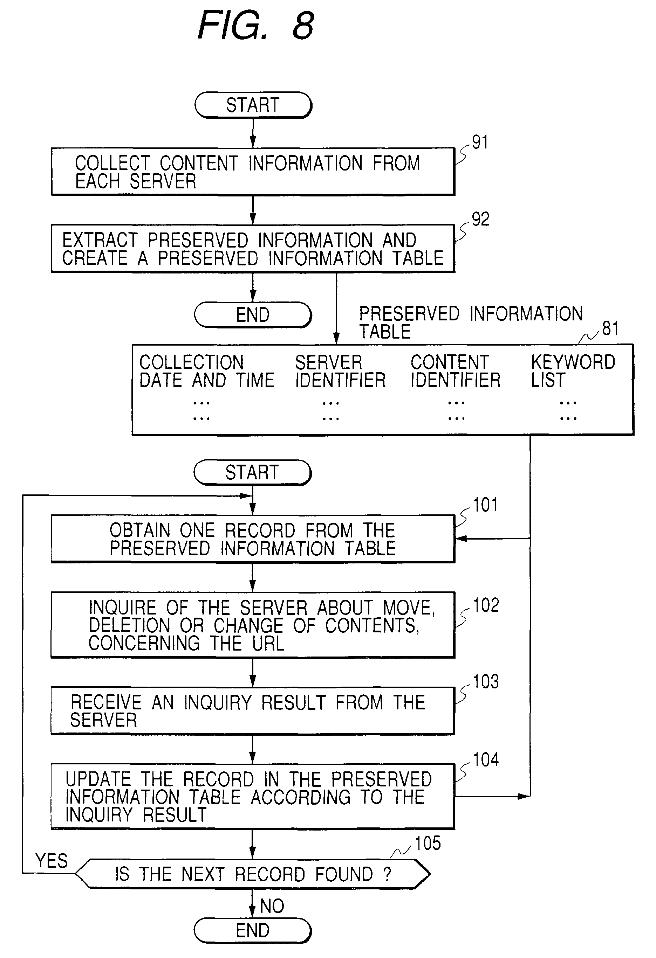

Fig. 8 is a diagram illustrating a schematic flow of the following processing: information collection and database registration of content using a computer connected to the Internet 10; and database correction using the content change management table 13. A search engine provided in the computer collects content information from each server 1 connected to the Internet 10 (step 91). A program of the computer extracts information, which will be stored in a database, from each content to create a preserved information table 81 (step 92). An example of the preserved information table 81 shown in Fig. 8 is a database in which each record has the following items: date and time of information collection; a URL of content; and a list of search keywords extracted from the content. The URL comprises a server identifier and a content identifier. Records having the same server identifier form one group. They are arranged so that they are accessed as a batch of records.

A program, which corrects the preserved information table 81 using the content change management table 13, is executed repeatedly by the computer in a manner asynchronous to content information collection by search robots. This program obtains records one by one from a first record of the preserved information table 81 (step 101). Next, the program transmits the URL and the collection date and time of the record to the server 1, and inquires status of move, deletion, or change of contents (step 102). The URL change confirmation program of the server 1 refers to the content change management table 13 to judge the status of the URL after specified date and time, and sends the result to the computer. Note that URL change confirmation program searches a history record in which as regards [URL after change] of the processing result, "operation" of the content change management table 13 is change of details. If the change of details is found, the URL change confirmation program sends its result to the computer. A preserved information table correction program receives the result of the inquiry from the server 1 (step 103), and updates the record in the preserved information table 81 according to the inquiry result (step 104). In other words, if the URL is updated, the collection date and time and the URL are updated. In addition, if the URL is not updated, only the collection date and time is updated. Moreover, when a response indicating the change of details is received, content information on the URL is collected. Then, preserved information is extracted to update preserved information of an appropriate record of the preserved information table 81. If the URL is deleted, the record is deleted from the preserved information table 81. If a next record is found in the preserved information table 81 (step 105 YES), the process proceeds to a step 101. If the next record is not found (step 105 NO), the processing ends.

It is to be noted that in the fourth embodiment, the processing may be limited on any one or two of the move, deletion, and change of details among the "operation"s of the content change management table 13.

As describe above, according to the present invention, each server manages content change within the range of its own server. This avoids the necessity of communications between WWW servers. In addition, in a case where content specified by the browsing user is not found, the content change management table is searched. Because of it, consumption of CPU time of the WWW server is low as compared with a method by which URL change is constantly monitored. Therefore, content identifiers can be managed economically. As a result, services at the time of content change can be given to the user who browses the content.

Moreover, when making a database from content information collected by search engines, it is possible to correct the database efficiently using the content change management table.

## Claims

1. A method for managing content change, comprising the steps of:
when a content identifier of a content stored in a storage device is changed, registering a content identifier before change and a corresponding content identifier after change in a table on the storage device;
when a content is deleted, registering a content identifier before deletion in said table;
receiving a content request that specifies said content identifier before change;
referring to said table, and treating the content identifier before change as the corresponding content identifier after change to send appropriate content as a response;
receiving a content request that specifies said content identifier before deletion; and
referring to said table, judging that the requested content has been deleted, and then sending a response message informing about the deletion.

2. A method for managing content change according to Claim 1, wherein instead of treating the content identifier before change as the corresponding content identifier after change to send appropriate content as a response, a response message informing about the content identifier after change is sent.

3. A method for managing content change, comprising the steps of:
receiving a content request that specifies a content identifier;
referring to a table that stores a content identifier before change and a corresponding content identifier after change, and a content identifier before deletion;
if the specified content identifier is equal to the content identifier before change, treating the content request as a content request that specifies the corresponding content identifier after change, and thereby sending appropriate content as a response; and
if the specified content identifier is equal to the content identifier before deletion, judging that the requested content has been deleted, and thereby sending a response message informing about the deletion.

4. A method for managing content change, comprising the steps of:
responding to an instruction for updating at least one content identifier stored in a storage device;
referring to a table that stores a content identifier before change and a corresponding content identifier after change, and a content identifier before deletion;
when the content identifier of which update has been instructed is equal to said content identifier before change, updating the content identifier to the corresponding content identifier after change; and
when the content identifier of which update has been instructed is equal to said content identifier before deletion, deleting the content identifier of which update has been instructed.

5. A method for managing content change, comprising the steps of:
collecting content information using a search engine;
associating information, which has been extracted from said content information, with the content identifier of said content information, and registering the associated information as a database in a storage device;
referring to a table that stores a content identifier of a content of which details have been changed; and
concerning a content having a corresponding content identifier on said table, repeating the collection processing and the extraction processing for said content information to update information on a corresponding content in said database.

6. A program for managing content change, which is used for providing a computer with functions, comprising:
a function of registering a content identifier before change and a corresponding content identifier after change in a table on a storage device when a content identifier of a content stored in the storage device is changed;
a function of registering a content identifier before deletion in said table when a content is deleted;
a function of receiving a content request that specifies said content identifier before change;
a function of referring to said table, and treating the content identifier before change as the corresponding content identifier after change to send appropriate content as a response;
a function of receiving a content request that specifies said content identifier before deletion; and
a function of referring to said table, judging that the requested content has been deleted, and then sending a response message informing about the deletion.

7. A program according to claim 6, wherein:
said program has a function of sending a response message informing about the content identifier after change, instead of treating the content identifier before change as the corresponding content identifier after change to send appropriate content as a response.

8. A program for managing content change, which is used for providing a computer with functions comprising:
a function of receiving a content request that specifies a content identifier;
a function including the steps of:
referring to a table that stores a content identifier before change and a corresponding content identifier after change, and content identifier before deletion; and
if the specified content identifier is equal to the content identifier before change, treating the content request as a content request that specifies the corresponding content identifier after change, and thereby sending appropriate content as a response; and
a function including the steps of:
if the specified content identifier is equal to the content identifier before deletion, judging that the requested content has been deleted, and thereby sending a response message informing about the deletion.

9. A program for managing content change, which is used for providing a computer with functions comprising:
a function including the steps of:
responding to an instruction for updating at least one content identifier stored in a storage device;
referring to a table that stores a content identifier before change and a corresponding content identifier after change, and a content identifier before deletion; and
when the content identifier of which update has been instructed is equal to said content identifier before change, updating the content identifier to the corresponding content identifier after change; and
a function of deleting the content identifier, of which update has been instructed, when the content identifier of which update has been instructed is equal to said content identifier before deletion.

10. A program for updating a database using a computer, wherein:
said database stores content information that is collected by a search engine, and that is extracted from the collected content information associated with a content identifier; and
said program provides functions comprising:
a function of referring to a table that stores a content identifier of a content of which details have been changed; and
a function including the steps of:
concerning a content having a corresponding content identifier on said table, repeating the collection processing and the extraction processing for said content information, and then updating said content information on a corresponding content in said database.
